# EUROPÄISCHE PATENTSCHRIFT

(11) **EP 2 233 369 B1**
(45) Veröffentlichungstag und Bekanntmachung des Hinweises auf die Patenterteilung: **15.05.2013**
(21) Anmeldenummer: 10002237.5
(22) Anmeldetag: 04.03.2010
(51) Int. Cl.: B60R 19/18

(54) **Aufprallelement sowie Verwendung eines Einlegers für einen Träger eines Aufprallelements**
Impact element and use of an inlay for a holder of an impact element
Elément de choc ainsi qu'utilisation d'une couche interne pour un support d'élément de choc

(30) Priorität: 25.03.2009 DE 202009004158 U
(43) Veröffentlichungstag der Anmeldung: 29.09.2010
(73) Patentinhaber: Jacob Plastics GmbH, 91489 Wilhelmsdorf (DE)
(72) Erfinder: Wacker, Marco, Dr., 91452 Wilhermsdorf (DE); Russ, Jörg, 90518 Altdorf (DE)
(74) Vertreter: Tschirwitz, Christian

(56) Entgegenhaltungen:
- EP-A1- 1 787 870
- WO-A1-03/042004
- WO-A1-2006/126941
- DE-A1- 10 307 637
- DE-A1- 19 907 783
- DE-A1-102004 024 468

## Beschreibung

Die vorliegende Erfindung betrifft ein Aufprallelement mit wenigstens einem Träger und wenigstens einem Deformationselement, wobei der Träger einen streifenförmigen Einleger aufweist, der zumindest teilweise mit Kunststoff ummantelt ist, sowie die Verwendung eines Einlegers für einen Träger eines Aufprallelementes.

Derartige Aufprallelemente werden beispielsweise in der Fahrzeugtechnik verwendet, um bei Aufprallsituationen durch plastische Verformung die Aufprallenergie zu vermindern. Zugleich ist es gewünscht, dass sämtliche Bauteile eines Fahrzeuges gewichtsoptimiert aufgebaut sind, um z.B. den Kraftstoffverbrauch des Fahrzeugs zu senken. Sicherheitsanforderungen und Gewichtsanforderungen sind dabei mitunter nicht einfach miteinander in Einklang zu bringen.

Des Weiteren sind Komponenten eines Fahrzeuges einem enormen Kostendruck unterworfen. Es wäre daher wünschenswert, Aufprallelemente und deren Komponenten so einfach und so kostengünstig wie möglich fertigen zu können und zwar ohne Abstriche bei der Sicherheit.

Die gattungsgemäße DE 103 07 637 A1 betrifft einen Querträger eines Stoßfängersystems aus Leichtmetall. Dabei ist der Querträger als Bestandteil eines Stoßfängersystems aus Leichtmetall mit einem hutförmigen Profil ausgeführt und zeichnet sich dadurch aus, dass der Querträger aus Magnesium oder einer Magnesiumlegierung besteht, wobei die Wandstärke des Zentralstegs des Querträgers größer ist als die Wandstärke der divergierenden Schenkel.

Aus der WO 03/042004 A1 ist ein Stoßfänger eines Kraftfahrzeuges bekannt, der energieabsorbierendes Material enthält, ein U-Profil aufweist und innerhalb der U-Profiles Versteifungsstege als Rahmenteile vorgesehen sein.

Es ist daher die Aufgabe der vorliegenden Erfindung, ein Aufprallelement der eingangs genannten Art in vorteilhafter Weise weiterzubilden, insbesondere dahingehend, dass dieses einfach sowie gewichtssparend aufgebaut ist und Aufprallenergie gut absorbieren kann.

Diese Aufgabe wird erfindungsgemäß durch ein Aufprallelement mit den Merkmalen des Anspruchs 1 gelöst. Danach ist vorgesehen, dass ein Aufprallelement wenigstens einen Träger und wenigstens ein Deformationselement aufweist, wobei der Träger einen streifenförmigen Einleger aufweist, der zumindest teilweise mit Kunststoff ummantelt ist. Weiter ist vorgesehen, dass der streifenförmige Einleger in wenigstens einem Profilabschnitt in wenigstens zwei Streifen geschlitzt und ein Streifen durch Umformen gegenüber dem anderen Streifen zurückgesetzt ist, wobei das Deformationselement mittels wenigstens eines Befestigungsmittels an dem Träger befestigbar oder befestigt ist und das Befestigungsmittel durch den Spalt zwischen den Streifen des Einlegers geführt ist, wobei wenigstens eine Kunststoffausformung vorgesehen ist, die derart angeordnet ist, dass sie eine Relativbewegung zwischen Befestigungsmittel oder dem Deformationselement und dem Einleger hemmt und/oder verhindert.

Dadurch lässt sich besonders einfach ein Aufprallelement ausbilden, das durch die Kombination der unterschiedlichen Materialeigenschaften wie E-Modul oder Streckgrenze des Materials des Einlegers sowie des Kunststoffes eine hohe Absorptionsfähigkeit für Aufprallenergie aufweist. Beispielsweise kann so die Biegefestigkeit eines Stahlbleches vorteilhaft mit der Schlagzähigkeit eines Kunststoffes kombiniert werden. Weiter lässt sich das Aufprallelement in einfachen und wenigen Arbeitsschritten aufbauen, so dass eine kostengünstige Fertigung möglich wird.

Ein Deformationselement kann beispielsweise eine kastenartige Struktur sein, die beim Aufprall durch Zusammenschieben einen großen Teil der Aufprallenergie absorbiert. Grundsätzlich kann vorgesehen sein, dass das Deformationselement auch Teil eines Space-Frames eines Fahrzeuges oder Teil der Karosserieaufbauten eines Fahrzeuges ist. Die Kunststoffausformung kann beispielsweise durch eine Wandung ausgebildet sein, die sich zwischen den Streifen des Einlegers zumindest teilweise erstreckt bzw. beide Streifen zumindest teilweise verbindet.

Das Aufprallelement weist insbesondere den Vorteil auf, dass für eine Trennung von Deformationselement vom Träger die Befestigungsmittel des Deformationselementes zunächst den Widerstand der Kunststoffausformung überwinden müssen, wodurch bereits z.B. ein großer Teil der Aufprallenergie absorbiert werden kann.

Bevorzugt wird es, wenn der streifenförmige Einleger endseitig ungeschlitzt ist. Besonders vorteilhaft ist es dabei, dass der Träger durch die Umformung des Einlegers eine aus sich heraus federnde Struktur aufweist.

Des Weiteren ist denkbar, dass der Einleger in dem Profilabschnitt in drei Streifen geschlitzt ist, wobei der mittlere Streifen durch Umformen gegenüber den anderen Streifen zurückgesetzt ist. Denkbar ist dabei beispielsweise, dass der Einleger in einem Endbereich ungeteilt bzw. ungeschlitzt ist und zwischen Profilabschnitt und Endbereich ein Übergangsbereich ausgebildet ist, in dem der mittlere Streifen vorzugsweise kantenlos geschwungen rückwärtig zurücksetzt und im Profilabschnitt rückwärtig zurückgesetzt parallel zu den vorderen äußeren Streifen verläuft.

Es ist möglich, dass sich durch die Verbindung der Spalte durch die Kunststoffausformung zwischen den Streifen ein im Wesentlichen im Querschnitt C-förmiges Profil ausbildet.

Darüber hinaus ist denkbar, dass an dem zurückgesetzten Streifen wenigstens ein Deformationselement befestigbar oder befestigt ist.

Außerdem kann vorgesehen sein, dass das Befestigungsmittel für das Deformationselement eine Schraube oder ein Bolzen ist und/oder dass das Befestigungsmittel den zurückgesetzten Streifen umgreift und/oder das Material des Einlegers nicht durchdringt. Dadurch ergibt sich beispielsweise der besondere Vorteil, dass der Verbund zwischen Träger und Deformationselement nur durch Aufreißen z.B. des mittleren Streifens des Einlegers erfolgen kann. Vor dem Aufreißen des Streifens muss jedoch zuerst beispielsweise die durch den Abstand des Deformationselements zu einem Übergangsbereich des Einlegers einstellbare und vordefinierbare Wegstrecke eines durch Kunststoff gefüllten Bereichs verformt werden. Denkbar ist es, dass der Widerstand einer durch Kunststoff ausgebildeten und beispielsweise den Spalt zwischen den Streifen verschließenden Wandung überwunden und plastisch verformt werden kann. Dadurch wird ein sehr großer Teil einer möglichen Aufprallenergie bereits absorbiert. Ein Aufreißen des Streifens wird dadurch bestmöglich erschwert.

Es ist weiter denkbar, dass für die Befestigung eines Deformationselement jeweils ein gesonderter Profilabschnitt vorgesehen ist.

Auch ist es möglich, dass für die Befestigung mehrerer Deformationselemente ein gemeinsamer Profilabschnitt vorgesehen ist.

Von Vorteil ist es weiter, wenn der Profilabschnitt durch eine oder mehrere Rippe(n), insbesondere Kunststoffrippe(n) verstärkt wird. Dadurch lässt sich der Träger auf einfache Weise stabilisieren.

Es kann vorgesehen sein, dass der Übergangsbereich zwischen Profilabschnitt und ungeschlitztem Endbereich des Einlegers durch wenigstens eine Rippe verstärkt wird.

Bevorzugt wird es, wenn mehrere Rippen zumindest teilweise umlaufend und/oder rückseitig am und/oder um den Profilabschnitt und/oder Übergangsbereich herum angeordnet sind. Einem frontseitigen Aufprall kann hierdurch besonders wirksam entgegengewirkt werden. Vorzugsweise sind die Rippen gleichmäßig beabstandet entlang des oberen Teils des Profilabschnittes angeordnet.

In vorteilhafter Ausgestaltung kann weiter vorgesehen sein, dass der Träger gekrümmt ist, vorzugsweise insgesamt oder jeweils endseitig nach hinten gekrümmt ist. Dadurch können die federnden bzw. abfedernden Eigenschaften vorteilhaft verstärkt werden.

Außerdem ist vorteilhaft denkbar, dass der Kunststoff ein faserverstärkter Kunststoff ist und/oder dass der streifenförmige Einleger ein ultrahochfestes Stahlblech ist.

Des Weiteren betrifft die Erfindung die Verwendung eines Einlegers für einen Träger eines Aufprallelementes gemäß einem der Ansprüche 1 bis 13. Dabei ist vorgesehen, dass der der streifenfömige Einleger in wenigstens einem Profilabschnitt in wenigstens zwei Streifen geschlitzt und ein Streifen durch Umformen unter Ausbildung eines Spaltes gegenüber dem anderen Streifen zurückgesetzt ist. Bevorzugt wird es, wenn der streifenfömige Einleger beidseitig endseitig ungeschlitzt ist und/oder wenn der Einleger in dem Profilabschnitt in drei Streifen geschlitzt ist, wobei der mittlere Streifen durch Umformen gegenüber den anderen Streifen zurückgesetzt ist.

Darüber hinaus betrifft die Erfindung ein Kraftfahrzeug mit den Merkmalen des Anspruchs 15. Danach ist vorgesehen, dass ein Kraftfahrzeug wenigstens ein Aufprallelement mit den Merkmalen eines der Ansprüche 1 bis 13 aufweist.

Weitere Einzelheiten und Vorteile sollen nachfolgend anhand eines in der Zeichnung näher dargestellten Ausführungsbeispiels näher erläutert werden. Es zeigen:
- Fig. 1:: eine perspektivische Ansicht der Rückseite eines Aufprallelementes;
- Fig. 2:: eine perspektivische Ansicht der Vorderseite eines Aufprallelementes;
- Fig. 3:: eine perspektivische Teilansicht der Vorderseite des Aufprallelementes ohne Kunststoffummantelung und
- Fig.4:: eine perspektivische Teilansicht der Rückseite des Aufprallelementes ohne Kunststoffummantelung.

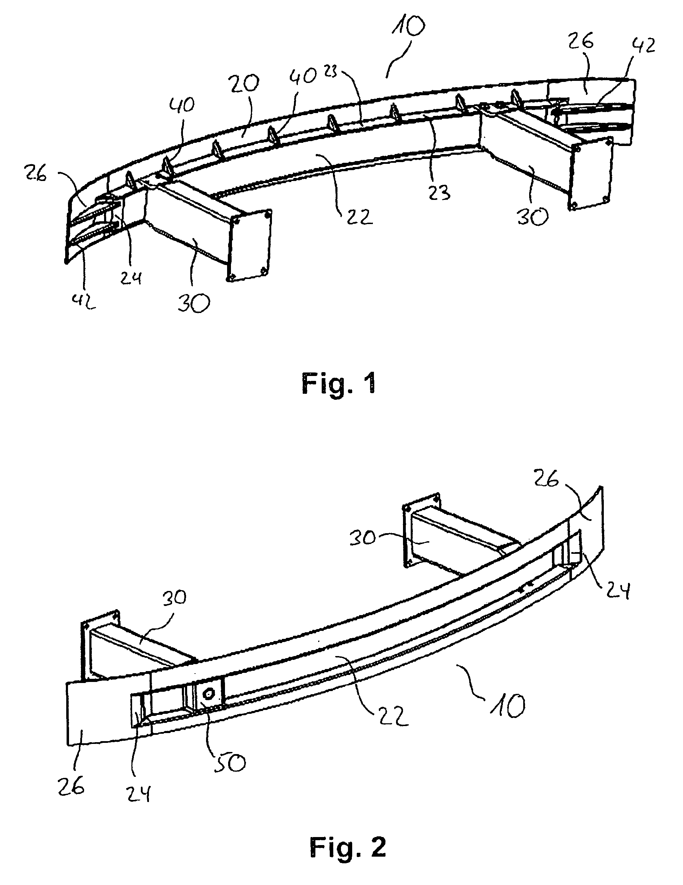

Fig. 1 und 2 zeigen eine perspektivische Ansicht der Vorder- und Rückseite eines Aufprallelementes 10. Dabei weist das Aufprallelement 10 im Wesentlichen drei Komponenten, im Einzelnen einen kunststoffummantelten Träger 20 sowie zwei Deformationselemente 30 auf, mittels derer das Aufprallelement 10 beispielsweise an einem Fahrzeug befestigt werden kann.

Als Kunststoff kann beispielsweise faserverstärkter Kunststoff verwendet werden, um den Träger 20 vollständig zu ummanteln. Auch die Deformationselemente 30 können aus faserverstärktem Kunststoff bestehen.

Der Träger 20 weist im Wesentlichen drei Bereiche 22, 24, 26 auf. Der Bereich 22 ist ein C-förmig ausgebildeter Profilabschnitt 22, bei dem eine Trägerwandung rückwärtig zurückgesetzt ist. Die C-Form wird im Wesentlichen durch den ummantelten, zurückgesetzten Streifen 62 des Einlegers 60 sowie die als Wandungen 23 ausgeführten Kunststoffausformungen 23 gebildet, die die Streifen 64 mit dem zurückgesetzten Streifen 62 verbinden.

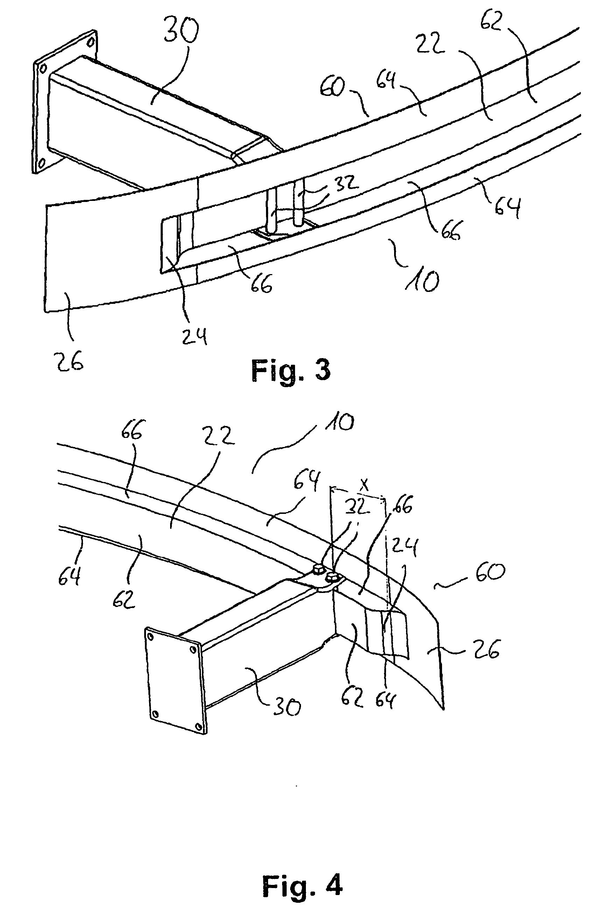

Der Profilabschnitt 22 wird, wie in Fig. 3 und 4 gezeigt, dadurch ausgebildet, dass ein aus ultrahochfestem Stahlblech bestehender Einleger 60 doppelt geschlitzt und der mittlere Streifen 62 durch Umformen gegenüber den beiden äußeren Streifen 64 zurückgesetzt wird. Die Streifen 62, 64 verlaufen dabei über die gesamte Trägerlänge im Wesentlichen parallel. Zu Beginn und Ende des Schlitzes ist ein Übergangsbereich 24 ausgebildet, in dem der Profilabschnitt 22 kantenlos geschwungen in den jeweils ungeschlitzten Endbereich 26 übergeht.

Grundsätzlich ist denkbar, dass auch ein ungeschlitzter, nicht näher dargestellter Mittelbereich ausgebildet ist, wobei ein Profilabschnitt 22 ebenfalls kantenlos geschwungen in diesen Mittelbereich des Träger 20 übergeht.

Zwischen den Streifen 62, 64 sind zwei Spalte 66 ausgebildet. Diese Spalte 66 werden bei der Ummantelung mit Kunststoff zu einer Kunststoffwandung 23 verschlossen. Im hier dargestellten Ausführungsbeispiel ist im Profilabschnitt 22 der untere Streifen 64 des Einlegers 60 schmaler ausgeführt als der obere Streifen 64 des Einlegers 60.

Vor der Ummantelung wird ein Deformationselement 30, das als Rechteckrohrstück 30 ausgebildet ist, mittels Schrauben 32 am rückwärtig zurückgesetzten Streifen 62 klemmend befestigt. Die Schrauben 32 bzw. entsprechende Bohrungen werden beim Ausbilden der Wandung 23 in die Wandung 23 eingeformt und umgreifen den Streifen 62 des Einlegers 60.

Wie in Fig. 1 gezeigt, werden die Wandungen 23 mittels an der Rückseite des Trägers 20 angebrachte Rippen 40 verstärkt. Des Weiteren sind jeweils zwei Rippen 42 vorgesehen, die den Übergangsbereich 24 verstärken und sich vom Endbereich 26 parallel Längsrichtung des Trägers hin zum Übergangsbereich erstrecken. Die Rippen 40 und 42 stehen dabei senkrecht auf der Trägeroberfläche.

Weiter ist es möglich, dass das Deformationselement 30 und/oder die Schrauben 32 durch Kunststoffelemente 50 frontseitig verblockt bzw. stabilisiert ist.

Anhand der Fig. 3 und 4 lässt sich anschaulich der Herstellungsprozess des Aufprallelements erläutern. Der aus ultrahochfestem Stahl bestehende Einleger 60 wird z.B. durch Stanzen doppelt geschlitzt, so dass sich drei in den Endbereich verbundene Streifen 62, 64 ausbilden. Der mittlere Streifen 62 wird durch ein geeignetes Umformverfahren, z.B. durch Kalt- oder Warmumformen parallel zu den vorderen Streifen 64, zurückgesetzt. Es bildet sich somit zwei Spalte 66 aus. Zugleich kann der gesamte Einleger 60 während des Umformens gekrümmt werden. Das Schlitzen und Umformen kann grundsätzlich auch in einem Arbeitsschritt erfolgen.

An dem rückwärtigen Streifen kann nunmehr ein Deformationselement 30 mittels Schrauben 32 klemmend befestigt werden.

Für die Ummantelung mit faserverstärktem Kunststoff wird der Einleger 60 in einem weiteren Schritt in eine Form gegeben und vollständig ummantelt. Dabei werden auch gleichzeitig die Rippen 40, 42 ausgebildet. Einleger 60 und faserverstärkter Kunststoff werden in einer Pressform mit einander verpresst. Dabei ist es denkbar, in einem Arbeitsgang auch Ummantelung und Umformung des Einlegers 60 zusammenzufassen.

Die Ummantelung kann aber beispielsweise auch durch ein Spritzgussverfahren erfolgen. Denkbar ist jedoch ebenfalls, dass mehrere Schichten Laminat auf den Einleger 60 aufgetragen und verklebt bzw. verpresst werden.

Besonders vorteilhaft ist, dass der Verbund zwischen Träger 20 und Deformationselement 30 nur durch Aufreißen des Stahlstreifen 62 erfolgen kann. Vor dem Aufreißen des Strahlstreifens 62 muss jedoch zuerst die durch den Abstand des Deformationselements 30 zum Übergangsbereich 24 einstellbare und vordefinierbare Wegstrecke der Kunststofffüllung 23 bzw. Wandung 23 (vgl. Strecke X in Fig. 4) überwunden und plastisch verformt werden, wodurch ein sehr großer Teil einer möglichen Aufprallenergie bereits absorbiert wird. Ein Aufreißen des Stahlstreifens 62 wird dadurch bestmöglich erschwert.

Denkbar ist es, den Profilabschnitt 22 bzw. den zurückgesetzten Streifen 62 nur dort vorzusehen, wo sich die Deformationselemente 30 bzw. die Befestigungselemente 32 befinden. Alternativ dazu kann sich der zurückgesetzte Streifen 62 auch über die gesamte Länge zwischen den Deformationselementen 30 erstrecken.

Die Kunststoffausformung 23 kann, muss jedoch nicht in dem Spalt 66 angeordnet sein. Alternativ oder zusätzlich kann sich die Kunststoffausformung 23 beispielsweise im Bereich zwischen den Deformationselementen 30 bzw. den Befestigungselementen 32 und dem benachbarten Bereichen, insbesondere bis hin zu den Übergangsbereichen 24 erstrecken.

In Fig. 4 ist mit dem Bezugszeichen "X" die Strecke gekennzeichnet, die zumindest teilweise mit Kunststoff gefüllt ist und die Verformungsarbeit leistet, bevor es zu einem Aufreißen des Stahlbleches kommt. Die Strecke X kann einstellbar bzw. veränderbar sein, wodurch dementsprechend die Verformungsarbeit bzw. die durch den Kunststoff aufgenommene Energie verändert werden kann.

## Patentansprüche

1. Aufprallelement (10) mit wenigstens einem Träger (20) und wenigstens einem Deformationselement (30), wobei der Träger (20) einen streifenförmigen Einleger (60) aufweist, der zumindest teilweise mit Kunststoff ummantelt ist,
wobei der streifenförmige Einleger (60) in wenigstens einem Profilabschnitt (22) in wenigstens zwei Streifen (62, 64) geschlitzt und ein Streifen (62) durch Umformen unter Ausbildung eines Spaltes (66) gegenüber dem anderen Streifen (64) zurückgesetzt ist, wobei das Deformationselement (30) mittels wenigstens eines Befestigungsmittels (32) an dem Träger (20) befestigbar oder befestigt ist und das Befestigungsmittel (32) durch den Spalt (66) zwischen den Streifen (62, 64) des Einlegers (60) geführt ist, wobei wenigstens eine Kunststoffausformung (23) vorgesehen ist, die derart angeordnet ist, dass sie eine Relativbewegung zwischen Befestigungsmittel (32) oder dem Deformationselement (30) und dem Einleger (60) hemmt und/oder verhindert.

2. Aufprallelement (10) nach Anspruch 1, **dadurch gekennzeichnet, dass** der streifenförmige Einleger (60) endseitig ungeschlitzt ist.

3. Aufprallelement (10) nach Anspruch 1 oder 2, **dadurch gekennzeichnet, dass** der Einleger (60) in dem Profilabschnitt (22) in drei Streifen (62, 64) geschlitzt ist, wobei der mittlere Streifen (62) durch Umformen gegenüber den anderen Streifen (64) zurückgesetzt ist.

4. Aufprallelement (10) nach einem der vorhergehenden Ansprüche, **dadurch gekennzeichnet, dass** sich durch die Verbindung der Spalte (66) durch die Kunststoffausformung (23) zwischen den Streifen (62, 64) ein im Wesentlichen im Querschnitt C-förmiges Profil ausbildet.

5. Aufprallelement (10) nach einem der vorhergehenden Ansprüche, **dadurch gekennzeichnet, dass** an dem zurückgesetzten Streifen (62) wenigstens ein Deformationselement (30) befestigbar oder befestigt ist.

6. Aufprallelement (10) nach einem der vorhergehenden Ansprüche, **dadurch gekennzeichnet, dass** das Befestigungsmittel (32) für das Deformationselement (30) eine Schraube (32) oder ein Bolzen (32) ist und/oder dass das Befestigungsmittel (32) den zurückgesetzten Streifen (62) umgreift und/oder das Material des Einlegers (60) nicht durchdringt.

7. Aufprallelement (10) nach einem der vorhergehenden Ansprüche, **dadurch gekennzeichnet, dass** für die Befestigung eines Deformationselementes (30) jeweils ein gesonderter Profilabschnitt (22) vorgesehen ist.

8. Aufprallelement (10) nach einem der Ansprüche 1 bis 6, **dadurch gekennzeichnet, dass** für die Befestigung mehrerer Deformationselemente (30) ein gemeinsamer Profilabschnitt (22) vorgesehen ist.

9. Aufprallelement (10) nach einem der vorhergehenden Ansprüche, **dadurch gekennzeichnet, dass** der Profilabschnitt (22) durch eine oder mehrere Rippe(n) (40, 42), insbesondere Kunststoffrippe(n) (40, 42) verstärkt wird.

10. Aufprallelement (10) nach einem der vorhergehenden Ansprüche, **dadurch gekennzeichnet, dass** der Übergangsbereich (24) zwischen Profilabschnitt (22) und ungeschlitztem Endbereich (26) des Einlegers (60) durch wenigstens eine Rippe (42) verstärkt wird.

11. Aufprallelement (10) nach Anspruch 9 oder 10, **dadurch gekennzeichnet, dass** mehrere Rippen (40) zumindest teilweise umlaufend und/oder rückseitig am und/oder um den Profilabschnitt (22) und/oder Übergangsbereich (24) herum angeordnet sind.

12. Aufprallelement (10) nach einem der vorhergehenden Ansprüche, **dadurch gekennzeichnet, dass** der Träger (20) gekrümmt ist, vorzugsweise jeweils endseitig nach hinten gekrümmt ist.

13. Aufprallelement (10) nach einem der vorhergehenden Ansprüche, **dadurch gekennzeichnet, dass** der Kunststoff ein faserverstärkter Kunststoff ist und/oder dass der streifenförmige Einleger (60) ein ultrahochfestes Stahlblech ist.

14. Verwendung eines Aufprallelementes (10) nach einem der vorhergehenden Ansprüche.

15. Kraftfahrzeug mit wenigstens einem Aufprallelement (10) nach einem der Ansprüche 1 bis 13.

## Claims

1. Impact element (10) having at least one carrier (20) and at least one deformation element (30), wherein the carrier (20) has a strip-like inlay (60) that is at least partially encased with plastic,
wherein the strip-like inlay (60) is separated into at least two strips (62, 64) in at least one profile section (22) and one strip (62) is relocated by deformation by forming a gap (66) opposite the other strip (64), wherein the deformation element (30) can be, or is, fastened to the carrier (20) by means of at least one fastening means (32) and the fastening means (32) is guided through the gap (66) between the strips (62, 64) of the inlay (60), wherein at least one plastic mould (23) is provided, which is arranged in such a way that it restrains and/or inhibits a relative movement between the fastening means (32) or the deformation element (30) and the inlay (60).

2. Impact element (10) according to claim 1,
**characterised in that**,
the strip-like inlay (60) is not separated at its end.

3. Impact element (10) according to claim 1 or 2,
**characterised in that**,
the inlay (60) is separated into three strips (62, 64) in the profile section (22), wherein the middle strip (62) is relocated opposite the other strips (64) by deformation.

4. Impact element (10) according to one of the preceding claims,
**characterised in that**,
an essentially cross-sectionally C-shaped profile is formed by connecting the gap (66) between the strips (62, 64) with the plastic mould (23).

5. Impact element (10) according to one of the preceding claims,
**characterised in that**,
at least one deformation element (30) can be, or is, attached to the relocated strip (62).

6. Impact element (10) according to one of the preceding claims,
**characterised in that**,
the fastening means (32) for the deformation element (30) is a screw (32) or a bolt (32) and/or that the fastening means (32) encompasses the relocated strip (62) and/or does not penetrate the material of the inlay (60).

7. Impact element (10) according to one of the preceding claims,
**characterised in that**,
a separate profile section (22) is provided for fastening a respective deformation element (30).

8. Impact element (10) according to one of claims 1 to 6,
**characterised in that**,
a mutual profile section (22) is provided to fasten several deformation elements (30).

9. Impact element (10) according to one of the preceding claims,
**characterised in that**,
the profile section (22) is strengthened by one or more ridges (40, 42), in particular synthetic ridges (40, 42).

10. Impact element (10) according to one of the preceding claims,
**characterised in that**,
the transfer region (24) between the profile section (22) and the non-separated end region (26) of the inlay (60) is strengthened by at least one ridge (42).

11. Impact element (10) according to claim 9 or 10,
**characterised in that**,
several ridges (40) are arranged at least partially circumferentially and/or rearward to and/or around the profile section (22) and/or around the transfer region (24).

12. Impact element (10) according to one of the preceding claims,
**characterised in that**,
the carrier (20) is curved, preferably curved backwards at its respective ends.

13. Impact element (10) according to one of the preceding claims,
**characterised in that**,
the plastic is a fibre-reinforced plastic and/or that the strip-like inlay (60) is an ultra-high-strength steel sheet.

14. Use of an impact element (10) according to one of the preceding claims.

15. Motor vehicle having at least one impact element (10) according to one of claims 1 to 13.

## Revendications

1. Elément absorbeur de choc (10) comprenant au moins une poutrelle (20) et au moins un élément de déformation (30), la poutrelle (20) présentant un insert (60) en forme de lame, qui est enrobé au moins partiellement de matière plastique, élément absorbeur de choc
dans lequel l'insert (60) en forme de lame est fendu, sur au moins un tronçon de profilé (22), en au moins deux lames (62, 64), et une lame (62) est amenée en retrait de l'autre lame (64) par déformation tout en créant une fente (66),
dans lequel l'élément de déformation (30) peut être fixé ou est fixé à la poutrelle (20) à l'aide d'au moins un moyen de fixation (32), et le moyen de fixation (32) est mené et guidé à travers la fente (66) entre les lames (62, 64) de l'insert (60), et
dans lequel il est prévu au moins un surmoulage de matière plastique (23), qui est agencé de manière à bloquer et/ou empêcher un mouvement relatif entre le moyen de fixation (32) ou l'élément de déformation (30) et l'insert (50).

2. Elément absorbeur de choc (10) selon la revendication 1, **caractérisé en ce que** l'insert (60) en forme de lame est non fendu aux extrémités.

3. Elément absorbeur de choc (10) selon la revendication 1 ou la revendication 2, **caractérisé en ce que** l'insert (60) est fendu, sur le tronçon de profilé (22), en trois lames (62, 64), la lame centrale (62) étant amenée en retrait par rapport aux autres lames (64), par déformation.

4. Elément absorbeur de choc (10) selon l'une des revendications précédentes, **caractérisé en ce que** grâce au pontage des fentes (66) par le surmoulage de matière plastique (23), il se forme entre les lames (62, 64) un profil sensiblement en forme de C en section transversale.

5. Elément absorbeur de choc (10) selon l'une des revendications précédentes, **caractérisé en ce que** sur la lame (62), qui est en retrait, peut être fixé ou est fixé au moins un élément de déformation (30).

6. Elément absorbeur de choc (10) selon l'une des revendications précédentes, **caractérisé en ce que** le moyen de fixation (32) pour l'élément de déformation (30) est une vis (32) ou un boulon (32), et/ou **en ce que** le moyen de fixation (32) enveloppe la lame (62) en retrait et/ou ne traverse pas le matériau de l'insert (60).

7. Elément absorbeur de choc (10) selon l'une des revendications précédentes, **caractérisé en ce qu'**il est à chaque fois prévu un tronçon de profilé (22) distinct pour la fixation d'un élément de déformation (30) respectif.

8. Elément absorbeur de choc (10) selon l'une des revendications 1 à 6, **caractérisé en ce qu'**il est prévu un tronçon de profilé (22) commun pour la fixation de plusieurs éléments de déformation (30).

9. Elément absorbeur de choc (10) selon l'une des revendications précédentes, **caractérisé en ce que** le tronçon de profilé (22) est renforcé par une ou plusieurs nervure(s) (40, 42), notamment une ou des nervure(s) de matière plastique (40, 42).

10. Elément absorbeur de choc (10) selon l'une des revendications précédentes, **caractérisé en ce que** la zone de transition (24) entre le tronçon de profilé (22) et la zone d'extrémité (26) non fendue de l'insert (60), est renforcée par au moins une nervure (42).

11. Elément absorbeur de choc (10) selon la revendication 9 ou la revendication 10, **caractérisé en ce que** plusieurs nervures (40) sont agencées au moins en partie de manière périphérique et/ou sur le côté arrière, sur le et/ou autour du tronçon de profilé (22), et/ou autour de la zone de transition (24).

12. Elément absorbeur de choc (10) selon l'une des revendications précédentes, **caractérisé en ce que** la poutrelle (20) est courbée, de préférence courbée vers l'arrière à chaque extrémité.

13. Elément absorbeur de choc (10) selon l'une des revendications précédentes, **caractérisé en ce que** la matière plastique est une matière plastique renforcée de fibres, et/ou **en ce que** l'insert (60) en forme de lame est une tôle d'acier ultra résistant.

14. Utilisation d'un élément absorbeur de choc (10) selon l'une des revendications précédentes.

15. Véhicule automobile comprenant au moins un élément absorbeur de choc (10) selon l'une des revendications 1 à 13.
